# EUROPEAN PATENT SPECIFICATION

(11) **EP 3 434 951 B1**
(45) Date of publication and mention of the grant of the patent: **30.12.2020**
(21) Application number: 16912541.6
(22) Date of filing: 30.11.2016
(51) Int. Cl.: F16L 9/06, E02D 29/045

(54) **BOX-TYPE PIPELINE WITH CIRCUMFERENTIAL OBTUSE ANGLE CONNECTION**
KASTENFÖRMIGE ROHRLEITUNG MIT UMLAUFENDER VERBINDUNG MIT STUMPFEM WINKEL
CONDUITE DE TYPE BOÎTE, À RACCORDEMENT CIRCONFÉRENTIEL À ANGLE OBTUS

(30) Priority: 09.08.2016 CN 201610649976
(43) Date of publication of application: 30.01.2019
(73) Proprietor: Nanjing Lianzhong Engineering Technology Co., Ltd., Jiangsu 211200 (CN)
(72) Inventor: ZHAN, Fujun, Nanjing, Jiangsu 211200 (CN)
(74) Representative: Hanna Moore + Curley
(86) International application number: PCT/CN2016/107897
(87) International publication number: WO 2018/028087

(56) References cited:
- CN-A- 1 142 434
- CN-A- 105 401 596
- CN-A- 105 401 596
- CN-A- 105 464 131
- CN-A- 106 090 450
- JP-A- 2015 048 574
- KR-A- 20100 042 452
- US-A- 770 236
- US-A- 4 650 369
- US-A1- 2015 075 664

## Description

### Technical Field

The present invention discloses a method of forming a box type duct, and particularly relates to a method for forming a box type duct with circumferential obtuse angle connection.

### Background Art

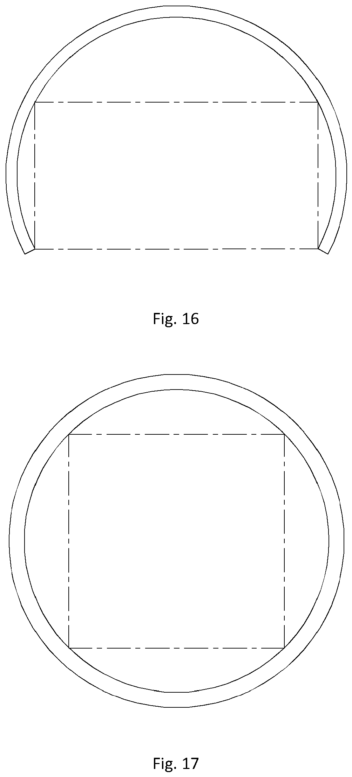

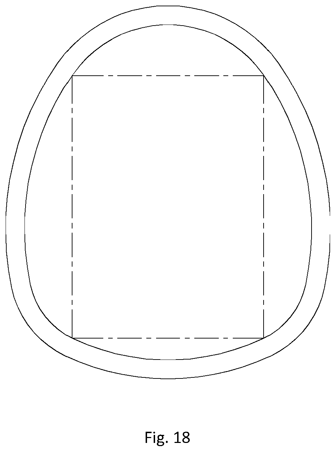

Steel corrugated steel pipes for highways, generally in the shape of a circle, an ellipse, a horseshoe or an arch, etc., all adopt an arc-shaped plate structure, so as to ensure the strength of the overall structure by utilizing the pipe-soil joint stressing principle when the structure is stressed. Regardless of whether the unit plates for constituting the unit pipe sections have the same center, the same radius, or multiple centers and multiple radii, the circumferential connection of the unit plates adopts an arc-shaped transition instead of connection by means of forming an obtuse angle between the plates. As shown in FIG. 16 to FIG. 18, in ordinary ducts of which the cross-sectional shape is generally circular, elliptical, horseshoe-shaped or arched, etc., the ordinary arc-shaped transition pipe culvert has the defects of low utilization ratio of the internal clearance, a great waste of space and high top chord height, result in increasing the earthwork excavation amount. However, in some cases where there is a specific requirement for the utilization ratio of the internal clearance of the duct, such as the corridor structure of the urban underground integrated pipe gallery and the culvert allowing passage of vehicles therefrom, it is necessary to make the cross section an approximately rectangular box shape to ensure the utilization ratio of clearance of the duct; and it is also necessary to use the pipe-soil joint stressing principle to ensure the overall strength, facilitate construction and accelerate the construction progress, so the traditional cross-section form and connection method cannot meet the requirements.

Therefore, it is urgent to solve the above technical problems.

The relevant state of the art is represented by CN 105401596 A, KR 1020100042452 A, US 2015/075664 A1 and US 770236 A1.

### Summary of the Invention

Accordingly, there is provided a method as defined in the claim 1.

Advantageous features are provided in the dependent claims.

Object of the Invention: the object of the present invention is to provide a method for forming a box type duct with circumferential obtuse angle connection, which has the advantages of maximized utilization ratio of internal clearance and cross section and high pipe wall strength, and can quickly implement duct splicing and simplify the production procedure.

Technical Solution: according to the invention, a box type duct is formed, having circumferential obtuse angle connection, unit plates respectively located on the upper, lower and two side surfaces are spliced in the circumferential direction to form a unit pipe section, and the unit pipe sections are spliced in the axial direction to form a box type duct; wherein the unit plate is an arc-shaped corrugated plate arched to the outside of the box type duct, and the adjacent unit plates form an obtuse angle of circumferential connection.

When the unit plates are spliced in the circumferential direction, contact ends of the adjacent unit plates are provided with connecting flanges, and the adjacent connecting flanges are splicing connection surfaces. The circumferential connection portion of the adjacent unit plates adopts a non-arc transition connection form and a non-right angle connection form, but is connected by an obtuse angle connection between the unit plate and the unit plate.

Preferably, the connecting flange is a flat flange or an angle steel flange.

Further, the angle steel flange comprises a pair of L-shaped plates, one sides of the pair of L-shaped plates contact each other, and the other sides are respectively connected with the adjacent unit plates.

According to the invention, when the unit plates are spliced in the circumferential direction, the adjacent connecting flanges are connected through a circumferential connection structure, the circumferential connection structure comprises a connecting plate bent at an angle, a reinforcing rib is disposed on the inner side of the connecting plate, and a triangular inner cavity is formed between the reinforcing rib and the connecting plate.

Furthermore, the bending angle of the connecting plate is an acute angle. The superior pressure bearing capacity of the combination of the acute angle connecting plate and reinforcing rib is utilized to reduce manufacturing costs, implement standardized production, and further enhance the stress strength of the overall structure.

Preferably, the connecting plate is provided with connecting holes for circumferential connection, and the connecting plate and connecting flange are connected through bolts to implement the connection between the adjacent unit plates. In the splicing process, the circumferential connection structure can realize a certain positioning function, thereby facilitating the circumferential connection of the adjacent unit plates in the mounting process and implementing quick mounting.

Further, the connecting plate is provided with circulation holes for pouring concrete. When the concrete needs to be poured after the splicing of the spliced duct is completed, in order to achieve the communication between the plates and the integrity of the concrete, the connecting plate is provided with circulation holes in the corresponding positions to implement the circulation of the concrete, so that a continuous hollow cavity structure is formed and spliced to form pipe sections, thereby further enhancing the vertical pressure bearing capacity of the duct.

Preferably, the unit plates have at least one curvature.

Furthermore, the corrugated plate is formed by a metal plate, and the metal plate is bent to form protrusions; or the metal plate is bent to form protruded shapes , and a plate or pipe is combined with the protrusions to form a hollow cavity structure; or the corrugated plate is spliced from a metal plate and a metal pipe; or a C-shaped steel, channel steel, I-beam, arc-shaped steel, angle steel or corrugated plate is fastened with the metal plate to form a hollow cavity structure.

Further, the inside of the hollow cavity is filled with concrete, or the inside of the hollow cavity is provided with steel bars and filled with concrete.

Preferably, the inner wall of the unit pipe section is provided with steel bars, embedded parts or hooks for arranging pipelines or hoses.

Furthermore, when the unit pipe sections are spliced in the axial direction, a rigid connection structure spanning adjacent pipe sections is disposed at axial edges of the adjacent unit pipe sections, and the rigid connection structure comprises a pair of fixing plates that are oppositely fastened to the edges of the unit pipe sections.

The rigid connection structure can effectively prevent the adjacent units from being deformed or detached by pulling during axial splicing in practical engineering.

Compared with the prior art, the present invention has the following beneficial effects:
(1) the cross section of the duct is in an approximately rectangular box shape, so the utilization ratio of clearance of the duct is high; the unit plate adopts an arc-shaped structure, and by utilizing the pipe-soil joint stressing principle, the strength and bearing capacity of the overall structure are maximized;
(2) the curvature of the unit plate of the present invention can be free from the limit of the diameter and span of the duct; unlike the spliced steel corrugated pipe with a circular cross section, the curvature of the unit plate is completely related to the diameter of the duct, and affects the selection of the wave height and wave pitch of the unit plate;
(3) the four obtuse angle connection structures of the unit pipe section of the present invention solve the problem that the diameter of the curling circle cannot be too small when the wave height of the corrugated plate is large; the non-arc transition of the four connection angles can use the corrugated plate with very large wave height to enhance the inertia moment of the corrugated plate, so that the diameter of the pipe section can be made very large;
(4) the box type duct adopts the flat flange or angle steel flange connection in the circumferential direction, and the length of each section can be made to more than 10m, so the overall construction progress is greatly accelerated; especially when adopting the angle steel flange connection, the stress in the corner stress concentration area is greatly improved, thereby avoiding the phenomenon of pipe structure damage due to the welding cracking of the single welding connection form of the connecting flange and the unit plate under the dynamic load condition;
(5) the circumferential connection structure is used as a limit when mounting the duct, thereby preventing the top plate from sliding left and right and ensuring the safety of the mounting process; and
(6) under the condition of ensuring the same utilization ratio of clearance and load, no arc transition plate is needed for connection between plates, so that the steel thickness and cross section arc length of the duct can be reduced, thereby saving the cost, being more beneficial to accelerating the construction progress of the construction site, and bringing in huge economic benefit and social benefit.

### Brief Description of the Drawings

FIG. 1 is a schematic view of a circumferential connection structure without the need for pouring concrete
FIG. 2 is a schematic view of a circumferential connection structure with the need for pouring concrete
FIG. 3 is a structural schematic view of a flat flange in a box type duct
FIG. 4 is a structural schematic view of a unit plate with a circumferential connection structure
FIG. 5 is a cross-sectional schematic view of a box type duct with a circumferential connection structure
FIG. 6 is a structural schematic view of a box type duct with a circumferential connection structure
FIG. 7 is a structural schematic view of a unit plate connected by a flat flange
FIG. 8 is a structural schematic view of a box type duct using flat flange connection
FIG. 9 is a cross-sectional schematic view of FIG. 8;
FIG. 10 is a partial schematic view of a corner in case of flat flange connection;
FIG. 11 is a partial schematic view of a corner in case of angle steel flange connection;
FIG. 12 is a structural schematic view of an arc transition connection form in the prior art;
FIG. 13 is a structural schematic view of a right angle transition connection form in the prior art;
FIG. 14 is a stress schematic view of an obtuse angle connection form in the present invention;
FIG. 15 is a structural schematic view when the unit pipe sections are spliced in the axial direction
FIG. 16 is a structural schematic view of internal clearance of an arched duct in the prior art;
FIG. 17 is a structural schematic view of internal clearance of a circular duct in the prior art; and
FIG. 18 is a structural schematic view of internal clearance of an elliptical duct in the prior art.

### Detailed Description of the Invention

The technical solution of the present invention will be further described below with reference to the accompanying drawings.

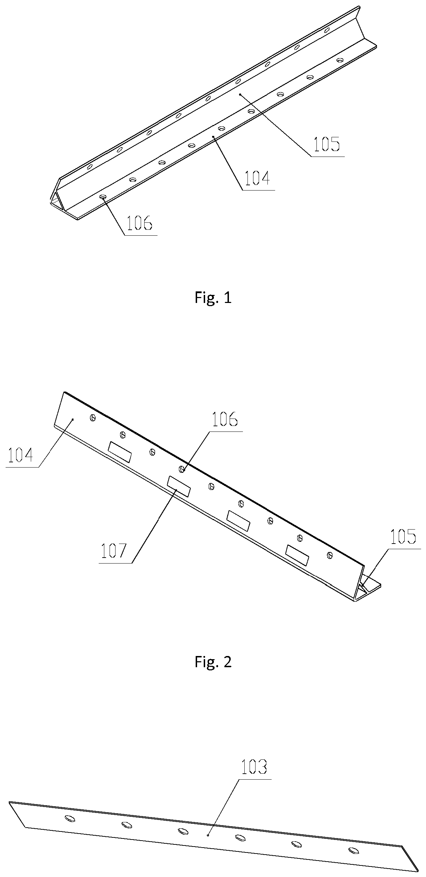

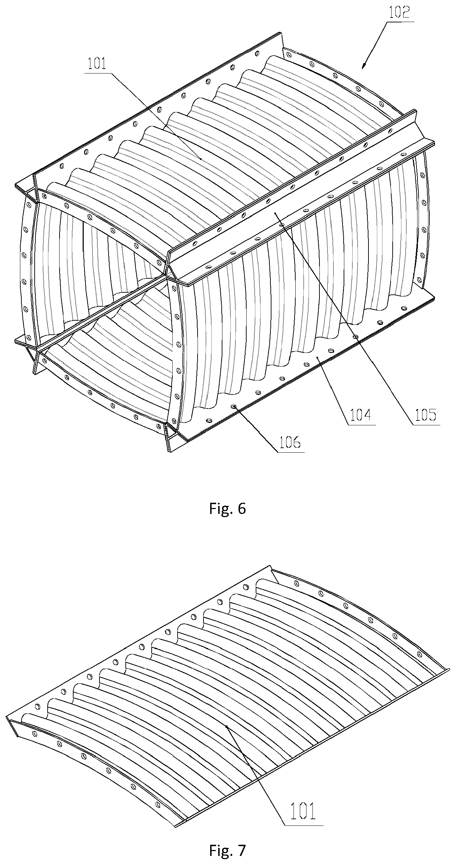

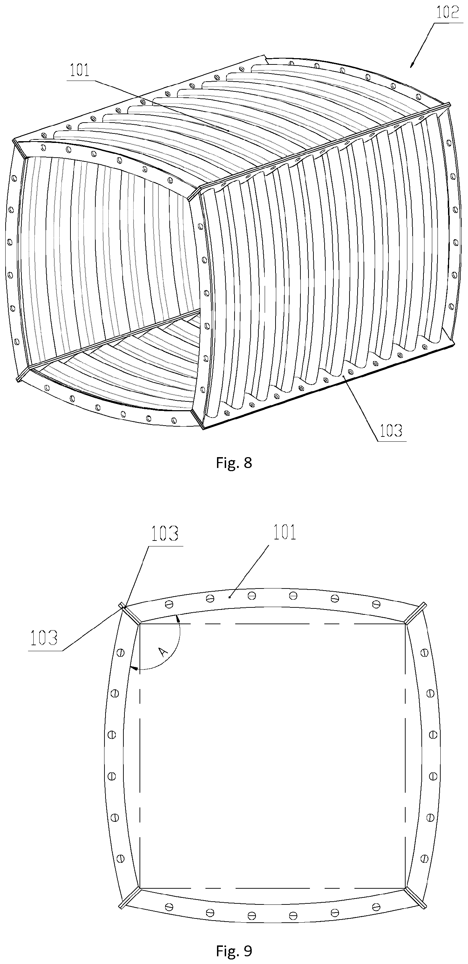

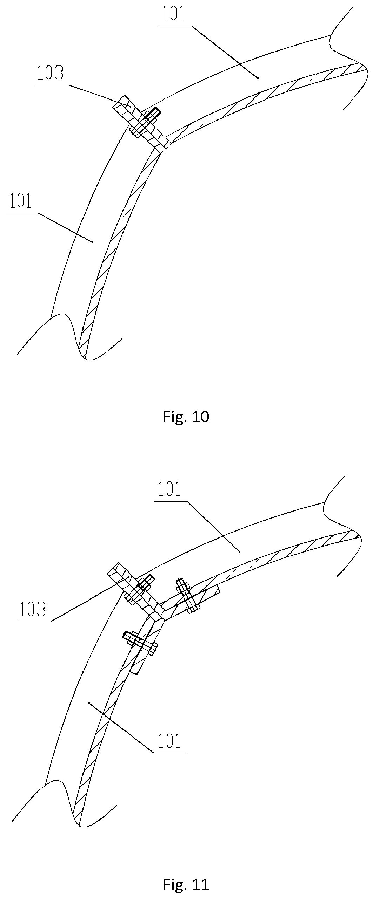

As shown in FIG. 6 and FIG. 8, according to the box type duct with circumferential obtuse angle connection unit plates 101 respectively located on the upper, lower and two side surfaces are spliced in the circumferential direction to form a unit pipe section 102, and the unit pipe sections 102 are spliced in the axial direction to form the box type duct; the unit plate 101 is an arc-shaped corrugated plate arched to the outside of the box type duct, the corrugated lines are perpendicular to the axis of the box type duct, and the adjacent unit plates 101 form an obtuse angle of circumferential connection; wherein when the unit plates 101 are spliced in the circumferential direction, contact ends of the adjacent unit plates 101 are provided with connecting flanges 103, and the adjacent connecting flanges 103 are splicing connection surfaces; as shown in FIG. 3, wherein the connecting flange 103 is a flat flange or an angle steel flange; and the circumferential splicing surfaces of the unit plate 101 and the connecting flange 103 are provided with circumferential connection holes, thus implementing quick connection through bolts, so the mounting is convenient, and the construction progress is greatly accelerated, as shown in FIG. 10. The flange face of the flat flange and the arc surface of the unit plate form an angle, as shown in FIG. 7 and FIG. 10. The angle steel flange is an L-shaped plate, and one side surface of the L-shaped plate and the unit plate 101 are connected with each other through bolts; wherein when the unit plates 101 are spliced in the circumferential direction, the adjacent L-shaped plates are connected with each other through bolts, as shown in FIG. 11. The box type duct adopts the flat flange or angle steel flange connection in the circumferential direction, so the overall construction progress is greatly accelerated; and especially when adopting the angle steel flange connection, the stress in the corner stress concentration area is greatly improved, thereby avoiding the phenomenon of pipe structure damage due to the welding cracking of the single welding connection form of the connecting flange and the unit plate under the dynamic load condition.

The unit plates 101 respectively located on the upper, lower and two side surfaces in the present invention have at least one curvature, and the four unit plates may be plates having the same curvature, and may also be plates with two, three or four different curvatures. The corrugated plate is formed by a metal plate, and the metal plate is bent to form protrusions; or the metal plate is bent to form protruded shapes, and a plate or pipe is combined with the protrusions to form a hollow cavity structure; or the corrugated plate is spliced from a metal plate and a metal pipe; or a C-shaped steel, channel steel, I-beam, arc-shaped steel, angle steel or corrugated plate is fastened with the metal plate to form a hollow cavity structure. The inside of the hollow cavity is filled with concrete, or the inside of the hollow cavity is provided with steel bars and filled with concrete. The corrugated height value and cross section inertia moment of the corrugated plate of the duct of the present invention can be very high, thereby avoiding the problem that the duct cannot be easily bent into the required curvature when the diameter of the duct is smaller or the radius of the arc transition section is small; and thus, the curvature of the plate is not limited by the diameter and span of the duct any more, thereby providing convenience for production and manufacturing.

The circumferential connection portions of the adjacent unit plates adopt a non-arc transition connection form and a non-right angle connection form, but is connected by an obtuse angle connection between the unit plate and the unit plate.

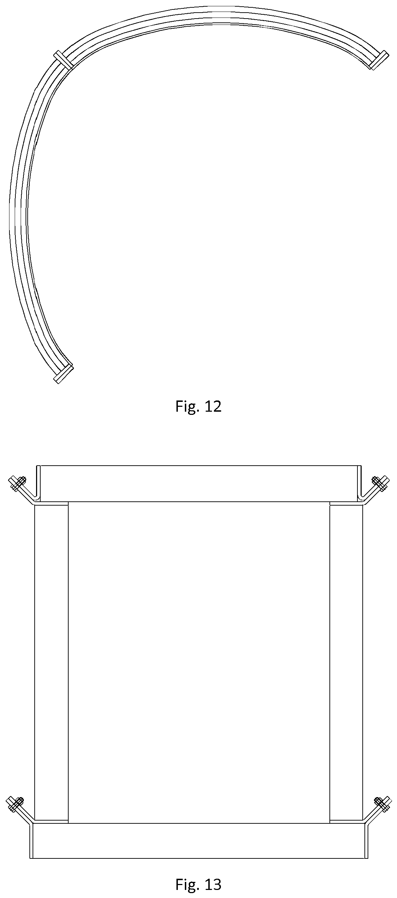

As shown in FIG. 12, the traditional arc transition connection form has higher requirements for the manufacturing and processing technique, and has high requirements for the consistency of arcs of the adjacent unit plates, otherwise it is difficult for mounting. More importantly: when the corrugation height is large and the diameter of the duct is smaller or the radius of the arc transition section is smaller, it is difficult to bend into the required curvature, thereby limiting the use of the corrugated plate with large wave height and large inertia moment. The direction of the stress of the duct in the arc transition connection form is the circumferential direction of the plate. As shown in FIG. 13, the right angle connection form cannot utilize the pipe-soil joint stressing principle, the transmission of the upper load through the joint is completely born by the columns at two side, so the requirement for the bearing capacity of the columns is extremely high.

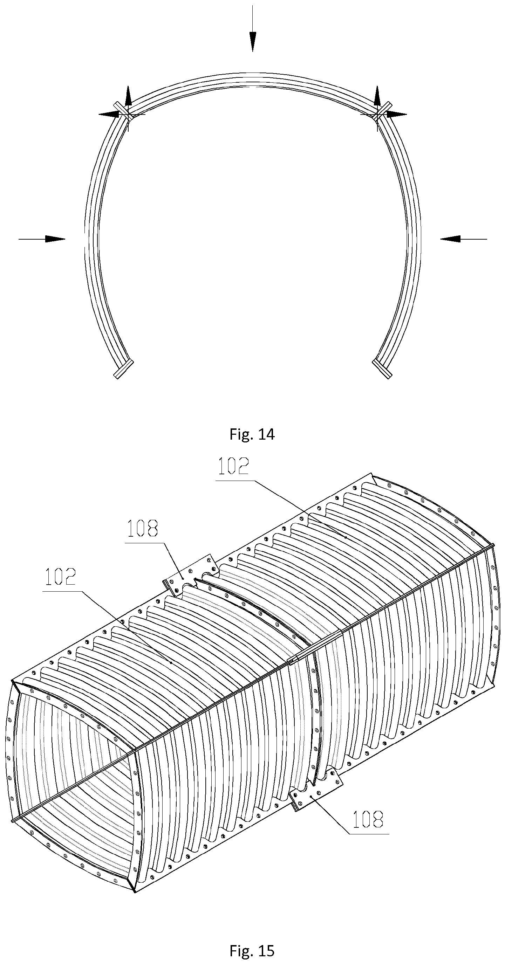

As shown in FIG. 14, the direction of the stress of the plates in the angle connection form of the present invention is also the circumferential direction of the plates; however, since the obtuse angle connection is used instead of the arc transition joint, the direction of the stress of the connecting corner, as shown in FIG. 14, and the extrusion of the side backfilling earth to the top plate enable the side plates at the connecting corner to have a large uplifting force component on the top plate, thereby reducing the upper load pressure born by the top plate. Similarly, the vertical pressure of the top plate enables the top plate to have large side thrust on the side plates at the connecting corner, thereby reducing the side load pressure born by the top plate, which indicates that the side plate load and the top load can partially cancel each other under such connection structure, so that the overall structure is more reasonable.

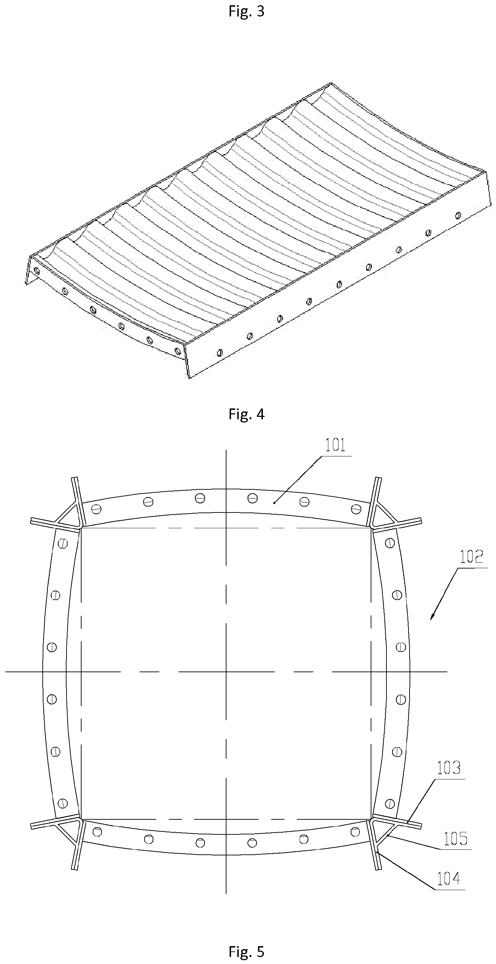

The cross section of the duct is in an approximately rectangular box shape, so the utilization ratio of clearance of the duct is high, as shown in dotted portions in FIG. 5 and FIG. 9. Since the unit plate adopt an arched corrugated plate of an arc-shaped structure, after backfilling the soil in the gallery, the surrounding backfill can form a good enveloping effect on the gallery; in terms of the overall structural force, the surrounding soil and the duct structure form a whole; and since the plate is arc-shaped in the circumferential direction, the strength and pressure bearing capacity of the overall structure are maximized by utilizing the pipe-soil joint stressing principle.

As shown in FIG. 5 and FIG. 6, when the unit plates 101 are spliced in the circumferential direction, the adjacent connecting flanges 103 are connected through a circumferential connection structure, the circumferential connection structure comprises a connecting plate 104 bent at an angle, the bending angle is an acute angle, a reinforcing rib 105 is disposed on the inner side of the connecting plate 104, and a triangular inner cavity is formed between the reinforcing rib 105 and the connecting plate 104. The reinforcing rib makes the overall structure more stable, and the connecting plate can realize a certain positioning function, thereby facilitating the circumferential connection of the adjacent unit plates in the mounting process and implementing quick mounting. The superior pressure bearing capacity of the combination of the acute angle connecting plate and reinforcing rib is utilized to reduce manufacturing costs, implement standardized production, and further enhance the stress strength of the overall structure. As shown in FIG. 4, a contact end of the unit plate 101 is provided with a connecting flange 103, the connecting flange 103 is a flat flange, and the flange face and the corrugated surface of the unit plate are perpendicular to each other, i.e., the flange face is located on the axial line of the arc-shaped unit plate, as shown in FIG. 5.

As shown in FIG. 1, the connecting plate 104 is provided with connecting holes 106 for circumferential connection, the circumferential splicing surfaces of the unit plate 101 and the connecting flange 103 are provided with circumferential connecting holes, and the circumferential connecting holes and the connecting holes 106 in the connecting plate 103 implement connection between the unit plates through bolts.

As shown in FIG. 2, the connecting plate 104 is provided with circulation holes 107 for pouring concrctc. When the concrctc needs to be poured after the splicing of the spliced pipe gallery is completed, in order to achieve the communication between the plates and the integrity of the concrete, the connecting plate is provided with circulation holes in the corresponding positions to implement the circulation of the concrete, so that a continuous hollow cavity structure is formed and spliced to form pipe sections, thereby further enhancing the vertical pressure bearing capacity of the pipe gallery.

The inner wall of the unit pipe section 102 is provided with steel bars, embedded parts or hooks, thereby facilitating the arrangement of pipelines or hoses inside in the later period.

As shown in FIG. 15, when the unit pipe sections 102 are spliced in the axial direction, a rigid connection structure spanning adjacent pipe sections is disposed at axial edges of the adjacent unit pipe sections, and the rigid connection structure comprises a pair of fixing plates 108 that are oppositely fastened to the edges of the unit pipe sections. The rigid connection structure may effectively prevent the adjacent units from being deformed or detached by pulling during axial splicing in practical engineering.

The present invention has the following uses: urban underground integrated pipe galleries, culverts, subway tunnels, underground water collecting pipes, water supply pipes or drain pipes, sea water ducts or other ducts conveying special media.

## Claims

1. A method for forming a box type duct with circumferential obtuse angle connection, the method comprising unit plates (101) respectively located on upper, lower and two side surfaces are spliced in the circumferential direction to form a unit pipe section (102), and the unit pipe sections (102) are spliced in the axial direction to form the box type duct; wherein the unit plate (101) is an arc-shaped corrugated plate arched to the outside of the box type duct, and the adjacent unit plates (101) form an obtuse angle of circumferential connection;
wherein the unit plates (101) are spliced in the circumferential direction, contact ends of the adjacent unit plates (101) are provided with connecting flanges (103), and the adjacent connecting flanges (103) are splicing connection surfaces; and
**characterized in that**, when the unit plates (101) are spliced in the circumferential direction, the adjacent connecting flanges (103) are connected with each other through a circumferential connection structure, the circumferential connection structure comprises a connecting plate (104) bent at an angle, a reinforcing rib (105) is disposed on the inner side of the connecting plate (104), and a triangular inner cavity is formed between the reinforcing rib (105) and the connecting plate (104).

2. The method for forming a box type duct with circumferential obtuse angle connection according to claim 1 wherein the connecting flange (103) is a flat flange or an angle steel flange.

3. The method of forming a box type duct with circumferential obtuse angle connection according to claim 2 wherein the angle steel flange comprises a pair of L-shaped plates, one side surfaces of the pair of L-shaped plates contact each other, and the other side surfaces are respectively connected with the adjacent unit plates (101).

4. The method for forming a box type duct with circumferential obtuse angle connection according to claim 1, wherein the bending angle of the connecting plate (104) is an acute angle.

5. The method for forming a box type duct with circumferential obtuse angle connection according to claim 1, wherein the connecting plate (104) is provided with connecting holes (106) for circumferential connection, and the connecting plate (104) and the connecting flange (103) are connected with each other.

6. The method for forming a box type duct with circumferential obtuse angle connection according to claim 1, wherein the connecting plate (104) is provided with circulation holes (107) for pouring concrete.

7. The method for forming a box type duct with circumferential obtuse angle connection according to claim 1, wherein the unit plates (101) have at least one curvature.

8. The method for forming a box type duct with circumferential obtuse angle connection according to claim 1, wherein to form a hollow cavity structure:
a) the corrugated plate is formed by a metal plate, the metal plate is bent to form protrusions and a plate or pipe is combined with the protrusions;
b) the corrugated plate is formed by a metal plate, the metal plate is bent to form protruded shapes and a plate or pipe is combined with the protruded shapes; or
c) a C-shaped steel, channel steel, I-beam, arc-shaped steel, angle steel or corrugated plate is fastened with a metal plate.

9. The method for forming a box type duct with circumferential obtuse angle connection according to claim 8, wherein the inside of the hollow cavity structure is filled with concrete, or the inside of the hollow cavity structure is provided with steel bars and filled with concrete.

10. The method for forming a box type duct with circumferential obtuse angle connection according to claim 1, wherein the corrugated plate is spliced from a metal plate and a metal pipe.

11. The method for forming a box type duct with circumferential obtuse angle connection according to claim 1, **characterized in that** the inner wall of the unit pipe section (102) is provided with steel bars, embedded parts or hooks for arranging pipelines or hoses.

12. The method for forming a box type duct with circumferential obtuse angle connection according to claim 1, **characterized in that** when the unit pipe sections (102) are spliced in the axial direction, a rigid connection structure spanning adjacent pipe sections is disposed at axial edges of the adjacent unit pipe sections (102), and the rigid connection structure comprises a pair of fixing plates (108) that are oppositely fastened to the edges of the unit pipe sections.

## Patentansprüche

1. Verfahren zum Bilden eines kastenförmigen Kanals mit einer stumpfwinkligen Umfangsverbindung, wobei das Verfahren Einheitsplatten (101) umfasst, die jeweils auf oberen, unteren und zwei seitlichen Flächen angeordnet sind, die in der Umfangsrichtung gespleißt werden, um einen Einheitsrohrabschnitt (102) zu bilden, und wobei die Einheitsrohrabschnitte (102) in der axialen Richtung gespleißt werden, um den kastenförmigen Kanal zu bilden;
wobei die Einheitsplatte (101) eine bogenförmige, gewellte Platte ist, die zur Außenseite des kastenförmigen Kanals gewölbt ist, und wobei die benachbarten Einheitsplatten (101) einen stumpfen Winkel der Umfangsverbindung bilden;
wobei die Einheitsplatten (101) in der Umfangsrichtung gespleißt werden, die Kontaktenden der benachbarten Einheitsplatten (101) mit Verbindungsflanschen (103) versehen werden und die benachbarten Verbindungsflansche (103) Spleißverbindungsflächen sind; und
**dadurch gekennzeichnet, dass**, wenn die Einheitsplatten (101) in der Umfangsrichtung gespleißt werden, die benachbarten Verbindungsflansche (103) durch eine Umfangsverbindungsstruktur miteinander verbunden werden, die Umfangsverbindungsstruktur eine in einem Winkel gebogene Verbindungsplatte (104) umfasst, eine Verstärkungsrippe (105) auf der Innenseite der Verbindungsplatte (104) angeordnet wird und ein dreieckiger innerer Hohlraum zwischen der Verstärkungsrippe (105) und der Verbindungsplatte (104) gebildet wird.

2. Verfahren zum Bilden eines kastenförmigen Kanals mit einer stumpfwinkligen Umfangsverbindung nach Anspruch 1, wobei der Verbindungsflansch (103) ein Flachflansch oder ein Winkelstahlflansch ist.

3. Verfahren zum Bilden eines kastenförmigen Kanals mit einer stumpfwinkligen Umfangsverbindung nach Anspruch 2, wobei der Winkelstahlflansch ein Paar L-förmiger Platten aufweist, wobei die einen Seitenflächen des Paares L-förmiger Platten einander berühren und die anderen Seitenflächen jeweils mit den benachbarten Einheitsplatten (101) verbunden werden.

4. Verfahren zum Bilden eines kastenförmigen Kanals mit einer stumpfwinkligen Umfangsverbindung nach Anspruch 1, wobei der Biegewinkel der Verbindungsplatte (104) ein spitzer Winkel ist.

5. Verfahren zum Bilden eines kastenförmigen Kanals mit einer stumpfwinkligen Umfangsverbindung nach Anspruch 1, wobei die Verbindungsplatte (104) mit Verbindungslöchern (106) zur Umfangsverbindung versehen wird und die Verbindungsplatte (104) und der Verbindungsflansch (103) miteinander verbunden werden.

6. Verfahren zum Bilden eines kastenförmigen Kanals mit einer stumpfwinkligen Umfangsverbindung nach Anspruch 1, wobei die Verbindungsplatte (104) mit Zirkulierungslöchern (107) zum Gießen von Beton versehen wird.

7. Verfahren zum Bilden eines kastenförmigen Kanals mit einer stumpfwinkligen Umfangsverbindung nach Anspruch 1, wobei die Einheitsplatten (101) mindestens eine Krümmung aufweisen.

8. Verfahren zum Bilden eines kastenförmigen Kanals mit einer stumpfwinkligen Umfangsverbindung nach Anspruch 1, wobei zur Bildung einer hohlen Hohlraumstruktur:
a) die gewellte Platte durch eine Metallplatte gebildet wird, die Metallplatte gebogen wird, um Vorsprünge zu bilden, und eine Platte oder ein Rohr mit den Vorsprüngen kombiniert wird;
b) die gewellte Platte durch eine Metallplatte gebildet wird, die Metallplatte gebogen wird, um hervorstehende Formen zu bilden, und eine Platte oder ein Rohr mit den hervorstehenden Formen kombiniert wird; oder
c) ein C-förmiger Stahl, U-Stahl, I-Träger, bogenförmiger Stahl, Winkelstahl oder eine gewellte Platte mit einer Metallplatte befestigt wird.

9. Verfahren zum Bilden eines kastenförmigen Kanals mit einer stumpfwinkligen Umfangsverbindung nach Anspruch 8, wobei das Innere der hohlen Hohlraumstruktur mit Beton gefüllt wird oder das Innere der hohlen Hohlraumstruktur mit Stabstahl versehen und mit Beton gefüllt wird.

10. Verfahren zum Bilden eines kastenförmigen Kanals mit einer stumpfwinkligen Umfangsverbindung nach Anspruch 1, wobei die gewellte Platte aus einer Metallplatte und einem Metallrohr gespleißt wird.

11. Verfahren zum Bilden eines kastenförmigen Kanals mit einer stumpfwinkligen Umfangsverbindung nach Anspruch 1, **dadurch gekennzeichnet, dass** die Innenwand des Einheitsrohrabschnitts (102) mit Stabstahl, eingebetteten Teilen oder Haken zum Anordnen von Rohrleitungen oder Schläuchen versehen wird.

12. Verfahren zum Bilden eines kastenförmigen Kanals mit einer stumpfwinkligen Umfangsverbindung nach Anspruch 1, **dadurch gekennzeichnet, dass**, wenn die Einheitsrohrabschnitte (102) in axialer Richtung gespleißt werden, eine starre Verbindungsstruktur, die benachbarte Rohrabschnitte überspannt, an axialen Kanten der benachbarten Einheitsrohrabschnitte (102) angeordnet wird und die starre Verbindungsstruktur ein Paar Befestigungsplatten (108) umfasst, die gegenüberliegend an den Kanten der Einheitsrohrabschnitte befestigt werden.

## Revendications

1. Procédé de formation d'une conduite de type boîte avec une liaison circonférentielle à angle obtus, le procédé comprenant des plaques unitaires (101) situées respectivement sur des surfaces supérieure, inférieure et deux surfaces sont jointes dans la direction circonférentielle pour former une section de tuyau unitaires (102), et des sections de tuyau unitaires (102) sont jointes dans la direction axiale pour former la conduite de type boîte ; la plaque unitaire (101) étant une plaque ondulée en forme d'arc arquée vers l'extérieur de la conduite de type boîte, et les plaques unitaires (101) adjacentes formant un angle obtus de liaison circonférentielle ;
les plaques unitaires (101) étant jointes dans la direction circonférentielle, les extrémités de contact des plaques unitaires (101) adjacentes étant pourvues de brides de liaison (103), et les brides de liaison (103) adjacentes étant des surfaces de liaison de jonction ; et
**caractérisé en ce que**, lorsque les plaques unitaires (101) sont jointes dans la direction circonférentielle, les brides de liaison (103) adjacentes sont reliées entre elles par une structure de liaison circonférentielle, la structure de liaison circonférentielle comprenant une plaque de liaison (104) pliée au niveau d'un angle, une nervure de renforcement (105) est disposée sur le côté interne de la plaque de liaison (104), et une cavité interne triangulaire est formée entre la nervure de renforcement (105) et la plaque de liaison (104).

2. Procédé de formation d'une conduite de type boîte avec une liaison circonférentielle à angle obtus selon la revendication 1, dans lequel la bride de liaison (103) est une bride plate ou une bride en acier cornier.

3. Procédé de formation d'une conduite de type boîte avec une liaison circonférentielle à angle obtus selon la revendication 2, dans lequel la bride en acier cornier comprend une paire de plaques en forme de L, une surface latérale de la paire de plaques en forme de L étant en contact l'une avec l'autre, et les autres surfaces latérales étant respectivement reliées aux plaques unitaires (101) adjacentes.

4. Procédé de formation d'une conduite de type boîte avec une liaison circonférentielle à angle obtus selon la revendication 1, dans lequel l'angle de courbure de la plaque de liaison (104) est un angle aigu.

5. Procédé de formation d'une conduite de type boîte avec une liaison circonférentielle à angle obtus selon la revendication 1, dans lequel la plaque de liaison (104) est pourvue de trous de liaison (106) pour une liaison circonférentielle, et la plaque de liaison (104) et la bride de liaison (103) sont reliées l'une à l'autre.

6. Procédé de formation d'une conduite de type boîte avec une liaison circonférentielle à angle obtus selon la revendication 1, dans lequel la plaque de liaison (104) est pourvue de trous de circulation (107) pour couler du béton.

7. Procédé de formation d'une conduite de type boîte avec une liaison circonférentielle à angle obtus selon la revendication 1, dans lequel les plaques unitaires (101) ont au moins une courbure.

8. Procédé de formation d'une conduite de type boîte avec une liaison circonférentielle à angle obtus selon la revendication 1, dans lequel pour former une structure à cavité creuse :
a) la plaque ondulée est formée par une plaque métallique, la plaque métallique est pliée pour former des saillies et une plaque ou un tuyau est combiné(e) avec les saillies ;
b) la plaque ondulée est formée par une plaque métallique, la plaque métallique est pliée pour former des formes saillantes et une plaque ou un tuyau est combiné(e) avec les formes saillantes ; ou
c) un acier en forme de C, un acier de canal, une poutre en I, un acier en forme d'arc, un acier cornier ou une plaque ondulée est fixé(e) avec une plaque métallique.

9. Procédé de formation d'une conduite de type boîte avec une liaison circonférentielle à angle obtus selon la revendication 8, dans lequel l'intérieur de la structure à cavité creuse est rempli de béton, ou l'intérieur de la structure à cavité creuse est pourvu de barres d'acier et rempli de béton.

10. Procédé de formation d'une conduite de type boîte avec une liaison circonférentielle à angle obtus selon la revendication 1, dans lequel la plaque ondulée est jointe à partir d'une plaque métallique et d'un tuyau métallique.

11. Procédé de formation d'une conduite de type boîte avec une liaison circonférentielle à angle obtus selon la revendication 1, **caractérisé en ce que** la paroi interne de la section de tuyau unitaire (102) est pourvue de barres d'acier, de pièces encastrées ou de crochets pour agencer des canalisations ou des tuyaux.

12. Procédé de formation d'une conduite de type boîte avec une liaison circonférentielle à angle obtus selon la revendication 1, **caractérisé en ce que** lorsque les sections de tuyau unitaires (102) sont jointes dans la direction axiale, une structure de liaison rigide couvrant les sections de tuyau adjacentes est disposée au niveau des bords axiaux des sections de tuyau unitaires (102) adjacentes et la structure de liaison rigide comprend une paire de plaques de fixation (108) qui sont maintenues de manière opposée aux bords des sections de tuyau unitaires.
